(19) Europäisches Patentamt
European Patent Office
Office européen des brevets

(11) **EP 2 151 622 B1**

(12) **EUROPÄISCHE PATENTSCHRIFT**

(45) Veröffentlichungstag und Bekanntmachung des Hinweises auf die Patenterteilung:
**03.08.2011 Patentblatt 2011/31**

(51) Int Cl.:
***F21S 8/00*** *(2006.01)*     ***F21V 14/06*** *(2006.01)*

(21) Anmeldenummer: **09167326.9**

(22) Anmeldetag: **06.08.2009**

(54) **Beleuchtungsvorrichtung mit veränderlichem Abstrahlwinkel**

Illumination device with changeable emission angle

Dispositif d'éclairage doté d'un angle de rayonnement variable

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **08.08.2008 DE 102008037054**

(43) Veröffentlichungstag der Anmeldung:
**10.02.2010 Patentblatt 2010/06**

(73) Patentinhaber: **OEC AG**
**80337 München (DE)**

(72) Erfinder:
• **Jetter, Rainer**
**85417 Marzling (DE)**
• **Nikolaus, Ines**
**85457 Hörlkofen (DE)**
• **Ries, Harald**
**80799 München (DE)**
• **Timinger, Andreas**
**80807 München (DE)**

(74) Vertreter: **Ganahl, Bernhard et al**
**Huber & Schüssler**
**Patentanwälte**
**Truderinger Strasse 246**
**81825 München (DE)**

(56) Entgegenhaltungen:
WO-A1-01/51847     WO-A1-2006/020574
US-A1- 2005 174 768     US-A1- 2008 044 142

**Beschreibung**

Die vorliegende Erfindung betrifft eine Beleuchtungsvorrichtung mit veränderlichem Abstrahlwinkel.

Aus der DE 199 01 391 A1 ist ein Scheinwerfer mit veränderlichem Abstrahlwinkel bekannt. Dieser Scheinwerfer umfasst eine Lichtquelle, einem der Lichtquelle zugeordneten Reflektor, einer in Abstrahlrichtung der Lichtquelle-Reflektor-Kombination im Strahlengang angeordneten ersten Sammellinse und einer im Strahlengang zwischen der Lichtquelle und der ersten Sammellinse angeordneten zweiten Sammellinse. Bei diesem Scheinwerfer ist die erste Linse, welche die Grundlinse des Scheinwerfers bildet, eine asphärische Linse. Vorzugsweise ist diese Linse zumindest auf einer Fläche genarbt.

Aus der EP 0 846 913 B1 geht ein ähnlicher Scheinwerfer hervor, der sich dadurch auszeichnet, dass der Abstand zwischen der Lichtquelle und dem Reflektor veränderbar ist.

Derartige Scheinwerfer haben sich in der Praxis sehr gut bewährt, da mit ihnen über einen weiten Bereich der Abstrahlwinkel eingestellt werden kann. Solche Scheinwerfer verwenden als Lichtquelle vor allem Glühfadenlampen mit kleiner Wendel. Für den Einsatz von Leuchtdioden als Lichtquelle sind diese bekannten Scheinwerfer nicht geeignet, da Leuchtdioden eine zu geringe Lichtleistung aufweisen.

Bei Verwendung von Leuchtdioden als Lichtquelle wäre es wünschenswert, wenn trotz eines veränderlichen Abstrahlwinkels die Leuchtdichte der Quelle möglichst wenig verdünnt wird.

Ernst Abbe (1840 bis 1905) entdeckte als Erster, dass eine Abbildung, für die die sphärische Aberration korrigiert ist und die gleichzeitig eine bestimmte Sinus-Bedingung erfüllt, frei von primärem Koma ist. Ein solches System nennt man auch aplanatisch, wobei dieser Begriff noch verschieden verwendet wird. Im folgenden werden die Korrektur der sphärischen Aberration und die Abbe'schen Sinus-Bedingung mit dem Begriff "Aplanasie-Bedingung" bezeichnet.

Die Aplanasie-Bedingungen wurden schon früh als Design-Kriterien in der abbildenden Optik eingeführt. Man nennt Objektive und Linsen, die diese Bedingung erfüllen, auch Aplanate.

Der abbildenden Optik steht die nicht-abbildende Optik bzw. Beleuchtungsoptik gegenüber, die dahingehend definiert werden kann, dass sie optische Elemente betrifft, von denen bekannt ist, wie sie einen Rand eines Lichtstrahlbündels einer Quelle auf einen Rand eines Lichtstrahlbündels eines Ziels abbilden (Harald Ries et al.: "Edge-Ray principle of non-imaging optics", Optical Society of America, Ausgabe 11, Nr. 10, Oktober 1994, Seite 2627 ff.).

Aus der WO 2006/020574 A1 geht eine Taschenlampe hervor, die eine Lichtquelle aufweist. Von der Lichtquelle wird mittels zweier Linsen ein reales Bild erzeugt. Es ist eine weitere Linse vorgesehen, die bzgl. der beiden anderen Linsen verschieblich angeordnet ist, so dass der abgestrahlte Lichtstrahlkegel in seinem Öffnungswinkel verstellbar ist. In einer Stellung der beweglichen Linse wird das reale Bild der Lichtquelle in das Unendliche abgebildet.

In der DE 10 2006 059 434 A1 ist ein Objektiv mit einer Vielzahl von Linsen offenbart, wobei objektnahe Sammellinsen näherungsweise aplanatisch ausgebildet sind.

Aus der US 2005/0174768 A1 geht ein Beleuchtungssystem hervor, das mehrere Leuchtdioden unterschiedlicher Farbe aufweist, um deren Licht in einem gemeinsamen Lichtstrahlkegel zu mischen.

Die EP 1 890 076 A1 beschreibt einen Beleuchtungsvorrichtung mit einer Leuchtdiode und einer Linse, die fast das gesamte Licht der Leuchtdiode auf einen auszuleuchtenden Bereich lenken kann. Die Linse ist zum Einstellen des Öffnungswinkels bzgl. der Leuchtdiode verschieblich angeordnet.

Aus der WO 2007/017617 A1 geht eine Beleuchtungseinrichtung hervor, die als Lichtquelle eine Leuchtdiode, eine erste abgestufte Linse und eine zweite abgestufte Linse aufweist. Die zweite abgestufte Linse ist bzgl. der ersten Linse und der Leuchtdiode beweglich, so dass der Öffnungswinkel des Lichtkegels eingestellt werden kann.

Das deutsche Patent DE 1 165 514 betrifft eine axialsymmetrische Sammellinse, die frei von sphärischer Aberration einen Lichtpunkt virtuell oder im unendlichen abbildet.

Es ist eine Aufgabe der vorliegenden Erfindung, eine Beleuchtungsvorrichtung mit veränderlichem Abstrahlwinkel zu schaffen, bei der über einen möglichst großen Bereich der Veränderung des Abstrahlwinkels eine möglichst gleichmäßige Verteilung der Lichtstärke erzielt wird.

Die Aufgabe wird durch eine Beleuchtungsvorrichtung mit dem Merkmal des Anspruchs 1 gelöst.

Eine weitere Aufgabe der vorliegenden Erfindung ist die Schaffung einer Beleuchtungsvorrichtung, mit welcher zum einen eine starke Veränderung des Abstrahlwinkels möglich ist und zum anderen bei großem Abstrahlwinkel noch eine vorbestimmte minimale Effizienz erzielt wird.

Diese Aufgabe wird durch eine Beleuchtungsvorrichtung mit den Merkmalen des Anspruchs 2 gelöst.

Vorteilhafte Ausgestaltungen der Erfindung sind in den jeweiligen Unteransprüchen angegeben.

Die erfindungsgemäße Beleuchtungsvorrichtung mit verändlichem Abstrahlwinkel weist eine Lichtquelle und ein Linsensystem auf. Das Linsensystem umfasst zwei Linsen, eine Primärlinse und eine Sekundärlinse, mit welchen das von der Lichtquelle abgestrahlte Licht zu einem Lichtstrahlkegel gebündelt wird. Die beiden Linsen und die Lichtquelle sind entlang einer optischen Achse angeordnet und die Primärlinse befindet sich zwischen der Lichtquelle und der Sekundärlinse. Die Primärlinse ist mit Abstand zur Lichtquelle angeordnet und der Abstand zwischen der Primärlinse und der Sekundärlinse kann entlang der optischen Achse verändert werden, um den Abstrahlwinkel des Lichtstrahlkegels zu verändern.

Nach dem ersten Aspekt der vorliegenden Erfindung zeichnet sich die Beleuchtungsvorrichtung dadurch aus, dass die Primärlinse eine numerische Apertur von zumindest 0,7 aufweist, die Primärlinse als Aplanat ausgebildet ist, und die Sekundärlinse derart ausgebildet ist, dass sie ein von der Primärlinse erzeugtes virtuelles Bild der Lichtquelle bei einem bestimmten Abstand der Sekundärlinse von der Primärlinse ins Unendliche abbildet.

Dadurch, dass die Primärlinse ein Aplanat ist, wird im Fernfeld die Lichtstärkeverteilung abgebildet, d.h., dass ein Lichtstrom eines bestimmten Raumwinkels auf einen anderen Raumwinkel abgebildet wird, wobei das Verhältnis des Raumwinkels eines bestimmten noch nicht abgebildeten Lichtstroms zu dem Raumwinkel des abgebildeten Lichtstroms konstant ist. Handelt es sich bei der Lichtquelle um einen homogenen Lambertstrahler, so erreicht man durch die Abbildung der Lichtstärkeverteilung mittels eines Aplanates einen Lichtstrahlkegel, der wiederum auf einen bestimmten Raumwinkel begrenzten Lambertstrahler darstellt. Ist die Sekundärlinse sehr nahe an der Primärlinse angeordnet, so hat die Sekundärlinse auf den Lichtstrahlkegel kaum eine Wirkung, wodurch das gesamte Linsensystem einen Lichtstrahlkegel mit etwa der Eigenschaft eines Lambertstrahlers erzeugt und somit im gesamten ausgeleuchteten Raumwinkel einen etwa konstanten Lichtstrom pro Raumwinkel aufweist.

Wird die Sekundärlinse in dem vorbestimmten Abstand zur Primärlinse angeordnet, so wird die Lichtquelle auf eine vorbestimmte Bildebene, die ausgeleuchtet werden soll, optisch abgebildet. Ist die Lichtquelle ein ebener Lambertstrahler, wie es bei Leuchtdioden in etwa der Fall ist, dann ergibt sich eine Bestrahlungsstärkeverteilung nach dem $\cos^4$-Gesetz. Aufgrund des kleinen Abstrahlwinkels des Lichtstrahlkegels ist der $\cos^4$-Einfluß vernachlässigbar, so dass eine im Wesentlichen gleichmäßige Beleuchtungsstärke erzielt wird.

Die Bildebene liegt hierbei im Unendlichen. Bei derartigen kleinen optischen Systemen kann ein Abstand von z.B. 5 m bereits als Unendlich betrachtet werden.

Die Primärlinse ist ein Aplanat. In der vorliegenden Offenbarung wird mit der Bezeichnung "Aplanat" eine Linse bezeichnet, die in einer bestimmten Anordnung zur Lichtquelle aplanatisch korrigiert ist. Hierdurch wird eine kleine Lichtquelle frei von Koma und frei von sphärischer Aberration abgebildet. Das Koma und die sphärische Aberration sind die dominanten Abbildungsfehler bei Linsen mit hoher Öffnung. Somit erzeugt die Primärlinse ein exaktes virtuelles Bild der Lichtquelle. Dieses exakte virtuelle Bild kann dementsprechend präzise von der Sekundärlinse abgebildet werden. Das Vorsehen eines Aplanaten als Primärlinse führt zu einer erheblich besseren Abbildung der Lichtquelle als bei einer Primärlinse, die kein Aplanat ist, wodurch zum einen eine maximal mögliche Bündelung und zum anderen eine gleichmäßige Ausleuchtung erzielt wird. Die Effizienz und die Gleichmäßigkeit der Ausleuchtung des von der Beleuchtungsvorrichtung erzeugten Lichtstrahlkegels wird somit optimiert.

Mit der erfindungsgemäßen Beleuchtungsvorrichtung wird somit einerseits die Lichtstärkeverteilung der Lichtquelle auf eine Zielfläche abgebildet und andererseits die Lichtquelle selbst auf die Zielfläche abgebildet. Bei der Abbildung der Lichtstärkeverteilung wird ein Lichtstrahlkegel mit großem Öffnungswinkel erzeugt, der die Eigenschaften eines Lambertstrahlers aufweist und eine hohe Lichtstärke im Zentrum und nach außen hin eine abnehmende Lichtstärke besitzt. Durch optische Abbildungen wird eine gleichmäßige Ausleuchtung der Zielfläche sichergestellt. Bei der optischen Abbildung der Lichtquelle wird ein sehr scharf begrenzter Lichtstrahlkegel erzeugt, wohingegen bei der Abbildung der Lichtstärkeverteilung ein allmählicher Abfall der Lichtstärke nach außen etwa nach dem $\cos^4$-Gesetz vorliegt.

Der Zwischenbereich zwischen den beiden "Abbildungsextremen" stellt einen Mischzustand dar, zwischen diesen beiden Abbildungen, bei dem von dem stark fokussiertem Lichtstrahlkegel auf einen allmählich weiteren Lichtstrahlkegel übergegangen wird, der ein zunehmend stärkeres Gefälle der Lichtstärke von innen nach außen aufweist. Gegenüber herkömmlichen Lichtquellen liegt ein wesentlicher Vorteil, dass im Zentrum des Lichtstrahlkegels immer eine hohe Lichtstärke vorliegt. Dies ist ein wesentlicher Vorteil, da bei bekannten Lichtquellen mit veränderlichem Abstrahlwinkel aufgrund geometrischer Effekte meistens für einen bestimmten Bereich des Abstrahlwinkels eine erhebliche Verminderung der Lichtstärke im Mittelpunkt vorliegt. Eine solche dunkle Stelle wird vom menschlichen Auge als sehr nachteilig wahrgenommen. Durch die Ausbildung der Primärlinse als Aplanaten wird dies zuverlässig verhindert.

Die Beleuchtungsvorrichtung ist besonders bei Verwendung einer Leuchtdiode oder einer Lichtquelle mit ähnlichen Eigenschaften wie eine Leuchtdiode vorteilhaft, da bei der Abbildung mittels eines Aplanaten die über den Winkelbereich homogene Lichtstärkeverteilung eines Lambertstrahlers auf einen anderen Winkelbereich abgebildet wird, wobei die Homogenität der Lichtstärkeverteilung beibehalten wird und bei der optischen Abbildung der Lichtquelle die gleichmäßige Ausleuchtung der ebenflächigen Abstrahlfläche auf die Zielfläche abgebildet wird.

Gemäß dem zweiten Aspekt der vorliegenden Erfindung ist die Sekundärlinse um einen Weg verschiebbar, der sich in einen Bereich erstreckt, in dem die Sekundärlinse nicht den gesamten von der Primärlinse erzeugten Lichtstrahlkegel umfasst. Dies hat zwar zur Folge, dass die Effizienz bzw. der Gesamtlichtstrom des von der Beleuchtungsvorrichtung abgegebenen Lichtstrahlbündels abnimmt, da ein Teil der Lichtleistung von der Sekundärlinse nicht mehr erfasst wird. Jedoch besteht bei derart großen Abständen zwischen der Primärlinse und der Sekundärlinse, bei welchen die Sekundärlinse nicht den gesamten von der Primärlinse erzeugten Lichtstrahlkegel erfasst, eine sehr starke Bündelung des von der Beleuchtungsvorrichtung abgegebenen Lichtstrahlbündels, wodurch die Lichtstärke sehr hoch ist. Es hat sich gezeigt, dass zwar die gesamte Lichtmenge des Lichtstrahlkegels mit zunehmender Bündelung abnimmt, aber die Lichtstärke etwa konstant bleibt, da im wesentlichen lediglich die am Umfangsbereich liegenden Raumwinkelbereiche durch die zunehmende Bündelung abgeblendet werden. Dadurch, dass die Sekundärlinse in einem Bereich verschiebbar ist, in dem nicht mehr der vollständige von der Primärlinse erzeugte Lichtstrahlkegel erfasst wird, ist es möglich, den von der Beleuchtungsvorrichtung abgegebenen Lichtstrahlbündel extrem zu bündeln.

Eine Aufweitung des Lichtstrahlbündels wird dadurch bewirkt, dass die Sekundärlinse näher an die Primärlinse geschoben wird, wodurch ab einem gewissen Abstand zwischen der Primärlinse und der Sekundärlinse von der Sekundärlinse der gesamte Lichtstrahlkegel erfasst wird. Hierdurch wird bei einem stärker aufgeweiteten Lichtstrahlbündel die gesamte von der Primärlinse erfasste Lichtmenge im abgestrahlten Lichtstrahlbündel genutzt. Die von der Primärlinse erfasste Lichtmenge wird durch deren numerische Apertur bestimmt, die zumindest 0,7 beträgt. Aufgrund der guten Effizienz des optischen Systems erzielt man auch bei aufgeweiteten Lichtstrahlkegel eine hervorragende Lichtstärke.

Bei beiden Aspekten der vorliegenden Erfindung beträgt die numerische Apertur der Primärlinse vorzugsweise zumindest 0,8, insbesondere zumindest 0,85 bzw. zumindest 0,9.

Vorzugsweise sind die Leuchtdioden weißes Licht ausstrahlende Leuchtdioden.

Die Erfindung wird nachfolgend beispielhaft an Hand von, in den Zeichnungen dargestellten Ausführungsbeispielen, erläutert. Die Zeichnungen zeigen schematisch vereinfacht:

Figur 1a, 1b alle optisch wirksamen Elemente einer Beleuchtungsvorrichtung gemäß der vorliegenden Erfindung,

Figur 1c eine Primärlinse der Beleuchtungsvorrichtung aus Figur 1 a und 1 b im Querschnitt,

Figur 2a, 2b alle optisch wirksamen Elemente einer weiteren Beleuchtungsvorrichtung gemäß der vorliegenden Erfindung,

Figur 2c eine Primärlinse der Beleuchtungsvorrichtung aus Figur 2a und 2b im Querschnitt,

Figur 3 in einer vergrößerten Darstellung die Leuchtdiode, Primärlinse und einer Ringblende, der Beleuchtungsvorrichtung nach Figur 2a und 2b.

Figur 4 eine bevorzugte Form eines Sammellinsenabschnittes der Primärlinse in einer Schnittsdarstellung zusammen mit einer Leuchtdiode,

Figur 5a-5c jeweils eine Primärlinse und eine Sekundärlinse in unterschiedlichen Abständen zueinander, zusammen mit dem hiermit im Fernfeld erzielten Lichtstärkeverteilungen,

Figur 6a-6c jeweils eine Primärlinse und eine Sekundärlinse in unterschiedlichen Abständen zueinander, zusammen mit dem hiermit im Fernfeld erzielten Lichtstärkeverteilungen, und

Figur 7a, 7b eine Tabelle der Koordinaten der Eintrittsfläche bzw. der Austrittsfläche des in Figur 4 gezeigten Sammellinsenabschnittes.

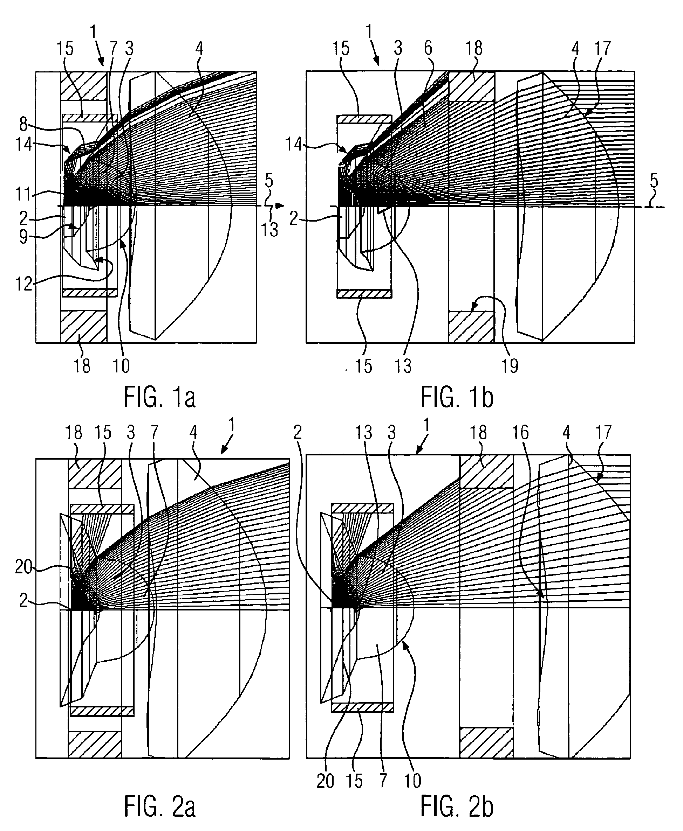

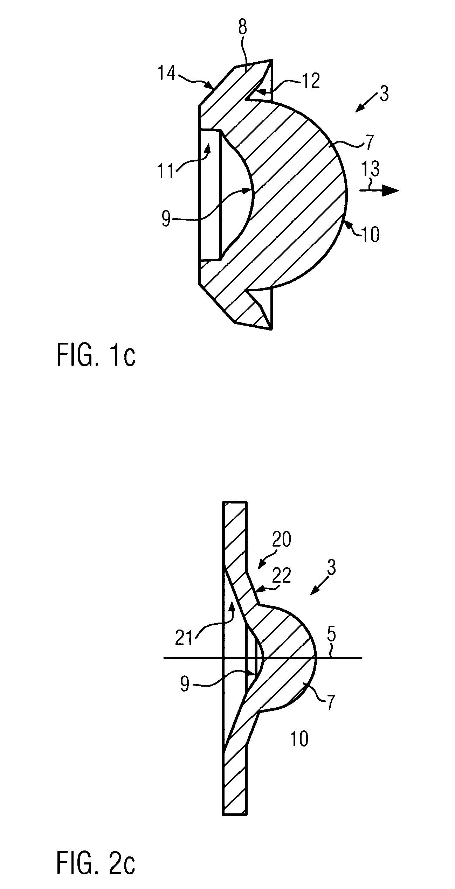

Ein erstes Ausführungsbeispiel der erfindungsgemäßen Beleuchtungsvorrichtung 1 (Figur 1a, 1b, 1c) weist als Lichtquelle 2 eine Leuchtdiode auf.

Die Leuchtdiode ist z.B. eine LUXEON Rebel von der Firma Phillips Lumileds Lighting Company.

Benachbart zur Leuchtdiode ist eine Primärlinse 3 zum Bündeln des von der Leuchtdiode ausgehenden Lichtstrahlkegels angeordnet. Die Beleuchtungsvorrichtung 1 weist weiterhin eine Sekundärlinse 4 auf, die mit etwas Abstand zur Primärlinse 3 angeordnet ist. Die Lichtquelle 2, die Primärlinse 3 und die Sekundärlinse 4 sind jeweils entlang einer optischen Achse 5 angeordnet, wobei die Primärlinse 3 und die Sekundärlinse 4 rotationssymmetrisch zur optischen Achse 5 ausgebildet sind.

Die Primärlinse 3 und die Sekundärlinse 4 bündeln das von der Lichtquelle 2 abgegebene Licht. Die Sekundärlinse 4 ist entlang der optischen Achse 5 verschiebbar, wodurch der Winkel des von der Beleuchtungsvorrichtung 1 abgestrahlten Lichtsstrahlkegels 6 verändert werden kann. Grundsätzlich gilt, dass je näher die Sekundärlinse 4 an der Primärlinse 3 angeordnet ist, desto stärker ist der Lichtstrahlkegel 6 aufgeweitet und je weiter entfernt die Sekundärlinse 4 von der Primärlinse 3 angeordnet ist, desto stärker wird der Lichtstrahlkegel gebündelt. Weiter unten wird jedoch ein Beispiel erläutert, bei dem dieser Zusammenhang nicht vollständig erfüllt ist.

Als Abstrahlwinkel eines Lichtstrahlkegels wird im Folgenden der Winkel zwischen der optischen Achse, zu der der Lichtstrahlkegel etwa rotationssymmetrisch ist und einer Begrenzungslinie des Lichtstrahlkegels verstanden. Der Abstrahlwinkel ist somit der halbe Winkel der gesamten Aufweitung des Lichtstrahlkegels.

Im vorliegenden Ausführungsbeispiel ist die Primärlinse 3 aus zwei Abschnitten, nämlich einen zentralen Sammellinsenabschnitt 7 und einen totalreflektierenden Ringlinsenabschnitt 8 ausgebildet.

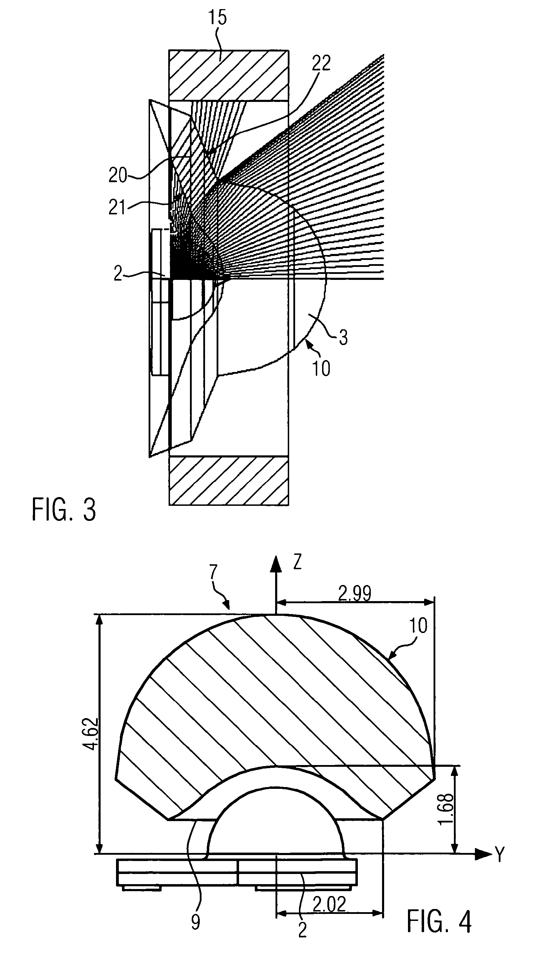

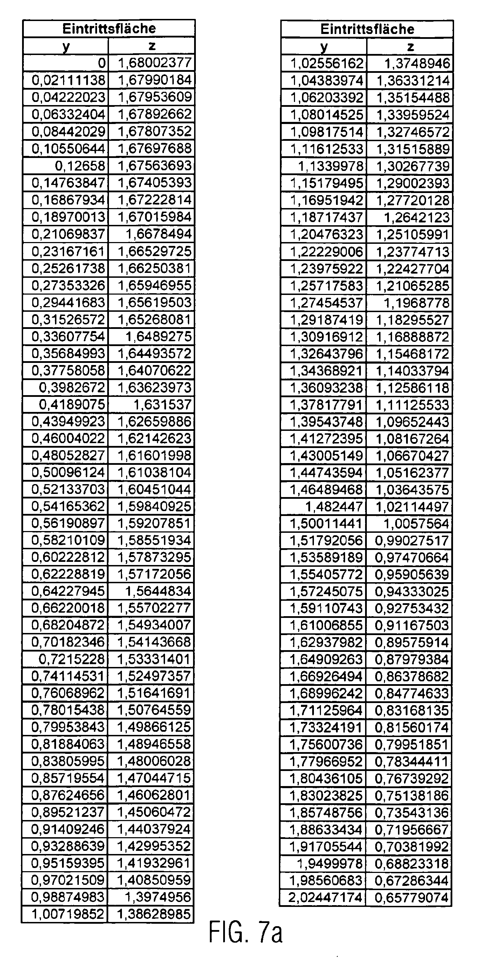

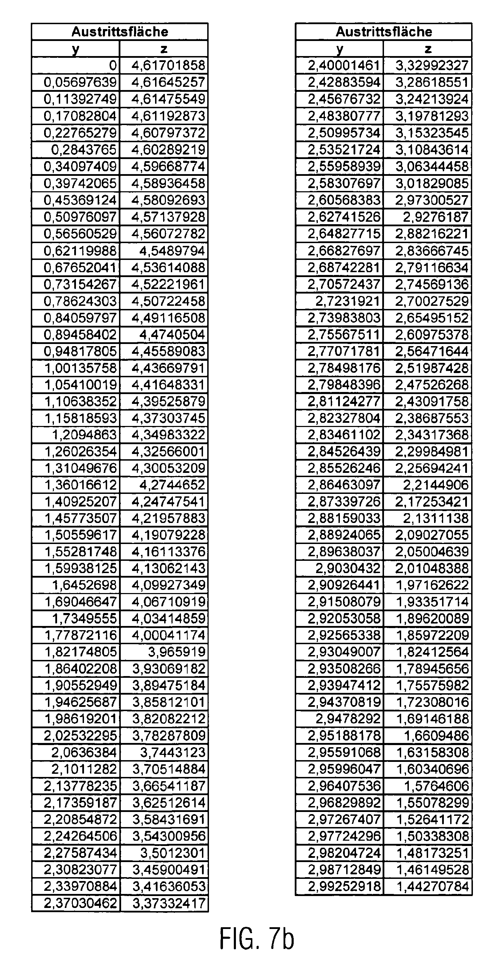

Der Sammellinsenabschnitt 7, der in Figur 4 separat dargestellt ist, weist eine konkave Eintrittsfläche 9 und eine konvexe Austrittsfläche 10 auf. Dieser Sammellinsenabschnitt 7 stellt einen Aplanaten dar. Die Koordinaten des Profils der Eintrittsfläche 9 und der Austrittsfläche 10 sind in den Tabellen der Figuren 7 und 8 aufgeführt. Dieser Sammellinsenabschnitt weist eine numerische Apertur von 0,951 für eine Lichtquelle auf, die im Ursprung des in Figur 4 gezeigten Koordinatensystems angeordnet ist. Bzgl. der Anordnung der Lichtquelle am Ursprung dieses Koordinatensystem ist dieser Sammellinsenabschnitt aplanatisch korrigiert.

Mit am Markt erhältlichen Optikdesignprogrammen, wie z.B. CODEV, können näherungsweise aplanatische Linsen berechnet werden, die eine numerische Apertur bis etwa 0,90 ermöglichen. Derartige "angenäherte" Aplanate sind auch für die Realisierung der erfindungsgemäßen Beleuchtungsvorrichtung 1 geeignet.

Der Ringlinsenabschnitt 8 weist eine Eintrittsfläche 11 und eine Austrittsfläche 12 auf. Die Eintrittsfläche 11 erstreckt sich etwa vom Rand der Eintrittsfläche 9 des Sammelabschnittes 7 in Richtung zur Lichtquelle 2, wobei die Eintrittsfläche 11 des Ringlinsenabschnittes 8 etwa die Form eines Zylinders aufweist. Radial außerhalb, der Eintrittsfläche 11 ist am Ringlinsenabschnitt 8 ein sich in Abstrahlrichtung 13 aufweitender Mantelabschnitt 14 ausgebildet, an dem die durch die Eintrittsfläche 11 in den Ringlinsenabschnitt 8 eintretenden Lichtstrahlen zur Austrittsfläche 12 total reflektiert werden. Durch den Ringlinsenabschnitt 8 wird die Lichtstrahlung außerhalb der numerischen Apertur des Sammellinsenabschnittes 7 erfasst und in Abstrahlrichtung 13 nach vorne umgelenkt. Die Eintrittsfläche 11 und die Austrittsfläche 12 sind asphärische Flächen.

Die Primärlinse 3 ist von einer Ringblende 15 umgeben, die quer zur optischen Achse 5 gestreutes Licht abschirmt.

Die Sekundärlinse 4 ist eine weitere Sammellinse mit einer konkaven Eintrittsfläche 16 und einer konvexen Austrittsfläche 17.

Die Sekundärlinse 4 weist eine Lochblende 18 auf, die benachbart zur Eintrittsfläche 16 der Sekundärlinse 4 angeordnet ist und dessen Öffnung 19 so ausgebildet ist, dass der von der Primärlinse ausgehende Lichtstrahlkegel derart begrenzt wird, dass lediglich Licht durch die Lochblende 18 hindurchgeht, das auf die Eintrittsfläche 16 der Sekundärlinse 4 trifft. Licht, das an der Sekundärlinse 4 vorbeigehen würde, wird von der Lochblende 18 absorbiert. Die Öffnung 19 der Lochblende 18 weist einen größeren Durchmesser als der Umfang der Ringblende 15 der Primärlinse 3 auf, so dass in der Stellung, in welcher die Sekundärlinse unmittelbar angrenzend an der Primärlinse 3 angeordnet ist, die Lochblende 18 konzentrisch die Ringblende 15 umgibt (Figur 1a). In der maximal entfernten Stellung des Sekundärlinse 4 von der Primärlinse 3 (Figur 1b) ist bei diesem Ausführungsbeispiel die Sekundärlinse derart ausgebildet, dass ein von der Primärlinse erzeugtes virtuelles Bild der Lichtquelle 2 ins Unendliche abgebildet wird. Das heißt, alle Lichtstrahlen, die von der Lichtquelle am Schnittpunkt mit der optischen Achse 5 austreten, werden durch die Brechwirkungen an der Primärlinse und der Sekundärlinse zu einem Lichtstrahlbündel mit parallelen Lichtstrahlen umgelenkt. Hierbei wird das Licht maximal gebündelt. Da die Lichtquelle 2 eine endliche Ausdehnung aufweist , wird ein Lichtstrahlkegel mit geringer Öffnung erzeugt.

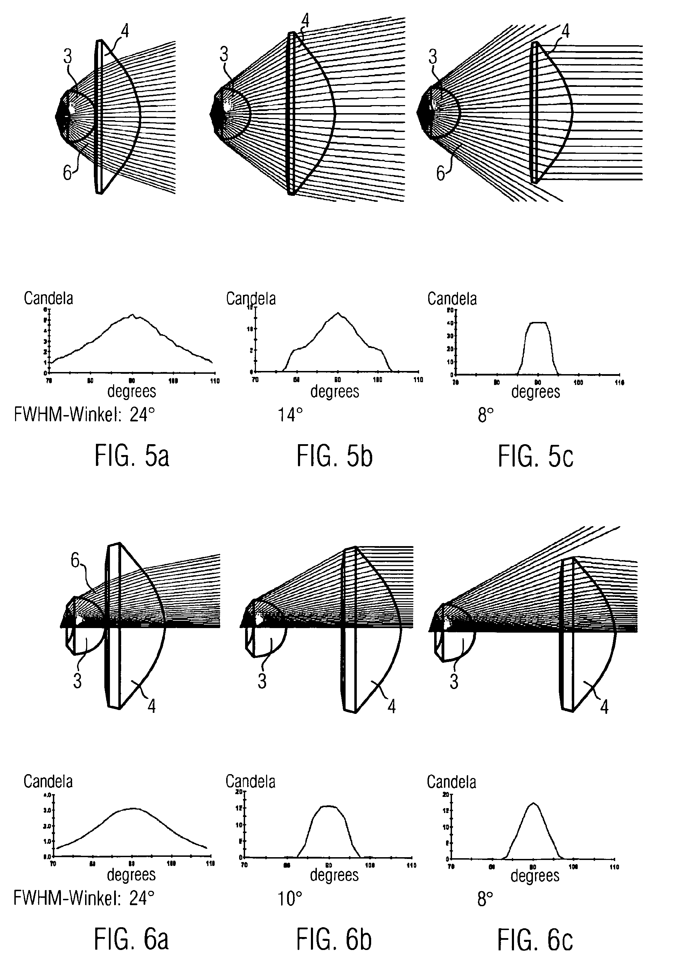

In den Figuren 5a bis 5c ist schematisch die Primärlinse und die Sekundärlinse in unterschiedliche Abständen zusammen mit dem Strahlenverlauf der Lichtstrahlen dargestellt. In Figur 5a ist die Sekundärlinse 4 unmittelbar an der Primärlinse angeordnet. Der erzeugte Lichtstrahlkegel weist eine volle Halbwertsbreite von 24° auf. In Figur 5b ist die Sekundärlinse 4 mit Abstand zur Primärlinse 3 angeordnet, wobei der Abstand so bemessen ist, dass die Eintrittsfläche 16 der Sekundärlinse 4 vollständig von dem von der Primärlinse abgegebenen Lichtstrahlkegel ausgeleuchtet ist, jedoch kein Licht an der Sekundärlinse 4 vorbeigeht. Der hierbei erzeugte Lichtstrahlkegel weist im Fernfeld eine Halbwertsbreite von 14° auf. Gemäß Figur 5c ist die Sekundärlinse 4 im maximalen Abstand zur Primärlinse 3 angeordnet, bei dem eine Abbildung der Lichtquelle 2 ins Unendliche erzeugt wird. Die hierbei erzeugte Halbwertsbreite des Lichtstrahlkegels beträgt 8°. Ein Teil des von der Primärlinse 3 austretenden Lichtes geht an der Sekundärlinse 4 vorbei. Bei dieser Anordnung wird auf einem Teil des von der Primärlinse 3 austretenden Lichtstroms verzichtet. Durch die sehr starke Bündelung des Lichtstrahlkegels weist dieser eine hohe Lichtstärke auf. Wird die Sekundärlinse 4 näher an die Primärlinse 3 bewegt, dann wird der erzeugte Lichtstrahlkegel aufgeweitet und somit mehr Licht von der Sekundärlinse 4 erfasst. Hierdurch kann sichergestellt werden, dass auch bei einem weiten Lichtstrahlkegel ein Mindestlichtstärke zumindest im zentralen Bereich des Lichtstrahlkegels erzielt wird.

Bei einer alternativen Ausführungsform des ersten Ausführungsbeispiels ist die Sekundärlinse 4 derart ausgebildet, dass die Beleuchtungsvorrichtung 1 die Lichtquelle ins Unendliche abbildet, wenn die Sekundärlinse 4 gerade vollständig an Ihrer Eintrittsfläche 16 ausgeleuchtet wird (Figur 6b). Hierdurch wird in der Lichtstärkenverteilung im Fernfeld des Lichtstrahlkegels eine Halbwertsbreite von lediglich 10° erzielt. Bei einer weiteren Vergrößerung des Abstandes zwischen der Sekundärlinse 4 und der Primärlinse 3 kann der Lichtstrahlkegel noch stärker gebündelt werden, wobei auf dem Teil des Lichtstroms verzichtet wird der am Rand der Sekundärlinse 4 vorbeigeht. Die Lichtstärkeverteilung im Fernfeld des Lichtstrahlkegels weist jeweils eine Halbwertsbreite von 8° auf. Dies entspricht der Halbwertsbreite der in Figur 5c gezeigten Ausführungsform, mit der die Lichtquelle ins Unendliche abgebildet wird. Aus dem Verlauf der Lichtstärkeverteilung kann man erkennen, dass bei der Abbildung ins Unendliche (Figur 5c) die Flanken steiler abfallen, so dass sich in dem Winkelbereich von ca.

85° bis 95° fast der gesamte Lichtstrom konzentriert, wohingegen bei einer "Überkollimierung" gemäß Figur 6c die Flanken flacher abfallen, wodurch sich die gesamte Lichtstrom auf einen größeren Winkelbereich verteilt, obwohl die gleiche Halbwertsbreite von 8° vorliegt.

Im Folgenden wird die Anordnung der Sekundärlinse 4 unmittelbar an der Primärlinse 3 (Figur 5a, 6a) als Minimalabstands-Anordnung und die Anordnung der Sekundärlinse 4 mit maximalen Abstand von der Primärlinse 3 als Maximalabstands-Anordnung bezeichnet. Die Anordnung, bei welcher der Lichtstrahlkegel 6 exakt die Eintrittsfläche 16 der Sekundärlinse 4 abdeckt, so dass eine Vergrößerung des Abstandes zwischen der Sekundärlinse 4 und der Primärlinse 3 dazu führen würde, dass ein Teil der Lichtstrahlen an der Sekundärlinse 4 vorbeigehen würde, wird im Folgenden als Deckungs-Anordnung (Figur 5b, 6b) bezeichnet.

Die Sekundärlinse 4 kann derart ausgebildet sein, dass sie die Lichtquelle 2 in der Deckungsanordnung oder in der Maximalabstands-Anordnung oder an einer Position der Sekundärlinse 4 zwischen der Deckungsanordnung und der Maximalabstands-Anordnung optisch abgebildet wird, d.h., dass die Lichtquelle ins Unendliche abgebildet wird oder der Lichtstrahlkegel kollimiert ist. Ein derart kollimierter Lichtstrahlkegel ist scharf begrenzt. Dies erkennt man auch an den in Fig. 5c und 6b gezeigten Lichtstärkeverteilungen. Der Übergang von einer allmählich radial nach außen abfallenden Lichtstärkeverteilung auf einen scharf begrenzten Lichtstrahlkegel ist relativ abrupt.

Die Etendue (Lichtleitwert) ist eine Erhaltungsgröße optischer Systeme. Mit ihr wird die geometrische Fähigkeit eines optischen Systems bezeichnet, Licht hindurch zu lassen (Lichtdurchgang) der numerische Wert der Etendue wird als Produkt aus der Öffnungsgröße und dem projizierten Raumwinkel, aus dem das System Licht aufnimmt, berechnet. Der Wert der Etendue (E) einer Lichtquelle wird folgendermaßen berechnet:

$$E = n^2 \cdot A \cdot \pi \cdot \sin^2(\alpha),$$

wobei n der Brechungsindex des die Lichtquelle umgebenden Mediums, A die leuchtende Fläche der Lichtquelle und $\alpha$ der Abstrahlwinkel der Lichtquelle ist. Für eine Leuchtdiode mit einer Fläche von 1 mm², einer Vorsatzlinse mit n=1,4 und einem Abstrahlwinkel von 90° ergibt sich ein Wert der Etendue von 6,16.

Der Wert des Etendue für den Lichtstrahlkegel des optischen Systems der Beleuchtungsvorrichtung berechnet sich gemäß folgender Formel:

$$E = n^2 \cdot d^2 \cdot \pi/4 \cdot \sin^2(\beta) \, \pi,$$

wobei d der Durchmesser der Primärlinse ist und $\beta$ der Öffnungswinkel des erzeugten Lichtstrahlkegels ist.

Diese Formel gilt, sofern die Sekundärlinse den von der Primärlinse durchgelassenen Lichtstrahlkegel vollständig erfasst.

Für einen Durchmesser d der Primärlinse von 17,7 mm und n=1 folgt für $\beta$ ein minimaler Öffnungswinkel von 5,1°. Eine stärkere Bündelung ist nur möglich, wenn weniger Licht durch das Linsensystem aufgenommen wird. Mit der in den Figuren 1a, 1b, 1c und 4 gezeigten Primärlinse wurde ein Öffnungswinkel von 72° realisiert, was einer numerischen Apertur von 0,95 entspricht. Dies ergibt eine Effizienz von 90%.

Bei einem Linsendurchmesser von 17,7 mm ist somit aus der Erhaltung der Etendue ein minimaler Abstrahlwinkel von $\beta$ größer 4,8° möglich. Will man einen kleineren Abstrahlwinkel erzielen, dann muss der aufgenommene Lichtstrom weiter reduziert werden. Bei dem oben beschriebenen Ausführungsbeispiel der vorliegenden Erfindung wird dies sowohl in der Ausführungsform nach den Figuren 5a bis 5c als auch in der Ausführungsform nach den Figuren 6a bis 6c dynamisch dadurch erzielt, dass im Bereich zwischen der Deckungsanordnung und der Maximalabstands-Anordnung ein Teil des Lichtes abgeblendet wird, in dem es nicht von der Sekundärlinse erfasst wird. Hierdurch wird der Wert der Etendue verringert, womit einer geringer Abstrahlwinkel möglich ist. Mit der Beleuchtungsvorrichtung, bei welcher die Primärlinse mit dem in Figur 4 gezeigten Sammellinsenabschnitt 7 ausgebildet ist, wurde bei einem Linsendurchmesser der Primärlinse von 17,7 mm eine Bündelung des Lichtstrahlkegels von 4° erzielt. Bei dieser Beleuchtungsvorrichtung betrug der Verstellweg zwischen der Minimalabstands-Anordnung und der Maximalabstands-Anordnung 7,4 mm.

Der Öffnungswinkel von 72° wird durch die Primärlinse 3 auf einen Lichtstrahlkegel mit einem Abstrahlwinkel von 38° gebündelt. Der maximale Abstrahlwinkel in der Minimalabstands-Anordnung beträgt 38°. Dieser maximale Abstrahlwinkel ist im Wesentlichen durch die Bündelung der Primärlinse 3 bestimmt, da die Wirkung der Sekundärlinse 4 in der Minimalabstands-Anordnung auf den Lichtstrahlkegel gering ist.

In den Figuren 2a, 2b, 2c und 3 ist ein zweites Ausführungsbeispiel der erfindungsgemäßen Beleuchtungsvorrichtung 1 gezeigt. Dieses Ausführungsbeispiel entspricht im Wesentlichen dem ersten Ausführungsbeispiel, wobei gleiche Teile mit gleichen Bezugszwecken bezeichnet werden nicht nochmals erläutert werden. Das zweite Ausführungsbeispiel unterscheidet sich vom ersten Ausführungsbeispiel lediglich in der Ausgestaltung der Primärlinse 3. Die Primärlinse 3 des zweiten Ausführungsbeispiels weist an Stelle des Ringlinsenabschnittes einen Umlenkkringabschnitt 20 auf, der eine Eintrittsfläche 21 und eine Austrittsfläche 22 besitzt. Die Eintrittsfläche 21 und die Austrittsfläche 22 sind etwa parallel zueinander angeordnet und verlaufen vom Sammellinsenabschnitt 7 unter einem steilen Winkel gegenüber der optischen Achse 5 entgegen der Abstrahlrichtung 13 radial nach außen. Mit dem Umlenkringabschnitt 20 werden die an der Eintrittsfläche 21 eintretenden Lichtstrahlen derart abgelenkt, dass sie auf die Ringblende 15 treffen, wo sie absorbiert werden. Hierdurch wird sichergestellt, dass vom Randbereich kein Streulicht nach Außen gelangt.

Die Unterdrückung des Streulichts ist besonders vorteilhaft, wenn Arrays von Lichtquellen, Primärlinsen und Sekundärlinsen vorgesehen werden, wobei die Primärlinsen 3 jeweils einer der Lichtquellen 2 zugeordnet sind und bezüglich der Lichtquellen 2 statisch angeordnet sind. Die Sekundärlinsen 4 sind jeweils einer Primärlinse 3 zugeordnet, und alle Sekundärlinsen sind gemeinsam verfahrbar. Eine jede Primärlinse 3 ist von einer Ringblende 15 umgeben. Benachbart zu der Sekundärlinsen 4 ist die Lochblende 18 angeordnet, wobei sie für eine jede Sekundärlinse 4 eine Öffnung 19 aufweist. Die Lochblende 18 wird zusammen mit der Sekundärlinse 4 verfahren. Mit einem solchen Array von erfindungsgemäßen Beleuchtungsvorrichtungen kann eine Scheinwerfer mit hoher Lichtstärke geschaffen werden, dessen Abstrahlwinkel über einen großen Bereich veränderlich ist.

Zur Erzielung eines runden Spots sind die Leuchtdioden eines solchen Arrays jeweils um einen Winkel gedreht. Die Drehwinkel werden vorzugsweise räumlich so verteilt, dass ähnliche Drehwinkel soweit wie möglich voneinander entfernt sind. Bei der Verwendung von gleichartigen Leuchtdioden wird eine Leuchtdiode i um den Winkel i-Z/N gedreht, wobei i die Nummer der Leuchtdiode bezeichnet, N die Gesamtzahl der Leuchtdioden und Z die kleinste Winkelperiode ist, nach welcher die Leuchtdiodenfläche wieder deckungsgleich mit der nicht gedrehten Leuchtdiodenfläche ist.

Hiermit wird somit ein stark bündelnder Scheinwerfer geschaffen, der einen gleichmäßigen runden Spot aufweist. Durch die Blenden 15, 18 wird zudem verhindert, dass Streulicht austritt, was besonders bei einen stark gebündelten Lichtstrahlkegel von Nachteil ist. Mit einem solchen Scheinwerfer kann der erzeugte Lichtstrahlkegelbereich von 38° bis 4° eingestellt werden.

Zur Ausbildung eines solchen Arrays von Beleuchtungsvorrichtungen sind sowohl das erste als auch das zweite Ausführungsbeispiel geeignet. Das zweite Ausführungsbeispiel wird jedoch bevorzugt, da hier Streulicht sicher vermieden wird.

Ein solches Array von Beleuchtungsverrichtungen mit "gedrehten" Leuchtdioden ist insbesondere vorteilhaft in Kombination mit unterschiedlich farbigen Leuchtdioden. Bei einem Prototypen wurden Leuchtdioden der Farben Rot, Grün und Blau verwendet, die jeweils abwechselnd im Array angeordnet sind. Durch das abwechselnde Anordnen der unterschiedlich farbigen Leuchtdioden und durch die gedrehte Anordnung der einzelnen Leuchtdioden ergab sich eine gute Durchmischung der unterschiedlich farbigen Lichtstrahlbündel. Somit ergab sich ein Gesamtlichtstrahlbündel mit homogener Farbe, dessen Farbe alleine durch die elektrische Ansteuerung der unterschiedlich farbigen Leuchtdioden gezielt veränderbar ist.

**Bezugszeichenliste**

1    Beleuchtungsvorrichtung
2    Lichtquelle
3    Primärlinse
4    Sekundärlinse
5    optische Achse
6    Lichtstrahlkegel
7    Sammellinsenabschnitt
8    Ringlinsenabschnitt
9    Eintrittsfläche
10   Austrittsfläche
11   Eintrittsfläche
12   Austrittsfläche
13   Abstrahlrichtung
14   Mantelabschnitt
15   Ringblende
16   Eintrittsfläche
17   Austrittsfläche
18   Lochblende
19   Öffnung
20   Umlenkringabschnitt
21   Eintrittsfläche
22   Austrittsfläche

**Patentansprüche**

1.  Beleuchtungsvorrichtung mit veränderlichem Abstrahlwinkel mit
    einer Lichtquelle (2) und

einem Linsensystem, das zwei Linsen, eine Primärlinse (3) und eine Sekundärlinse (4), zum Bündeln des von der Lichtquelle (2) abgestrahlten Lichtes zu einem Lichtstrahlkegel umfasst,

wobei die beiden Linsen (3, 4) und die Lichtquelle (2) entlang einer optischen Achse (5) angeordnet sind und sich die Primärlinse (3) zwischen der Lichtquelle (2) und der Sekundärlinse (4) befindet, und der Abstand zwischen der Primärlinse (3) und der Sekundärlinse (4) entlang der optischen Achse (5) veränderlich ist, um den Abstrahlwinkel des Lichtstrahlkegels zu verändern,

**dadurch gekennzeichnet,**

**dass** die Primärlinse (3) eine numerische Apertur von zumindest 0,7 aufweist,

**dass** die Primärlinse (3) ein Aplanat ist, und

**dass** die Sekundärlinse (4) derart ausgebildet ist, dass sie ein von der Primärlinse (3) erzeugtes virtuelles Bild der Lichtquelle (2) bei einem bestimmten Abstand der Sekundärlinse (4) von der Primärlinse (3) ins Unendliche abbildet.

2. Beleuchtungsvorrichtung mit veränderlichem Abstrahlwinkel mit

einer Lichtquelle (2) und

einem Linsensystem, das zwei Linsen, eine Primärlinse (3) und eine Sekundärlinse (4), zum Bündeln des von der Lichtquelle (2) abgestrahlten Lichtes zu einem Lichtstrahlkegel umfasst,

wobei die beiden Linsen (3, 4) und die Lichtquelle (2) entlang einer optischen Achse (5) angeordnet sind und sich die Primärlinse (3) zwischen der Lichtquelle (2) und der Sekundärlinse (4) befindet, und der Abstand zwischen der Primärlinse (3) und der Sekundärlinse (4) entlang der optischen Achse (5) veränderlich ist, um den Abstrahlwinkel des Lichtstrahlkegels zu verändern,

**dadurch gekennzeichnet,**

**dass** die Primärlinse (3) eine numerische Apertur von zumindest 0,7 aufweist,

**dass** die Sekundärlinse (4) um einen Weg verschiebbar ist, der sich in einen Bereich erstreckt, in dem die Sekundärlinse (4) nicht den gesamten von der Primärlinse (3) erzeugten Lichtstrahlkegel erfasst.

3. Beleuchtungsvorrichtung nach Anspruch 1 oder 2,
**dadurch gekennzeichnet,**

**dass** die Primärlinse (3) mit einem vorbestimmten Abstand zur Lichtquelle (2) angeordnet ist und dass die Sekundärlinse (4) um einen Weg verschiebbar ist, der das Vielfache des Abstandes zwischen Primärlinse (3) und Sekundärlinse (4) beträgt.

4. Beleuchtungsvorrichtung nach einem der Anspruch 1 bis 3,
**dadurch gekennzeichnet,**

**dass** die Primärlinse (3) eine numerische Apertur von zumindest 0,9 aufweist.

5. Beleuchtungsvorrichtung nach einem der Ansprüche 1 bis 4,
**dadurch gekennzeichnet,**

**dass** die Sekundärlinse (4) um einen Weg verschiebbar ist, der sich in einen Bereich erstreckt, in dem die Sekundärlinse (4) nicht den gesamten von der Primärlinse erzeugten Lichtstrahlkegel erfasst.

6. Beleuchtungsvorrichtung nach einem der Ansprüche 1 bis 5,
**dadurch gekennzeichnet,**

**dass** die Primärlinse (3) und die Sekundärlinse (4) in ihrem Zentrum jeweils eine konkave Eintrittsfläche (9, 11) und jeweils eine konvexe Austrittsfläche (10, 12) aufweisen.

7. Beleuchtungsvorrichtung nach Anspruch 6,
**dadurch gekennzeichnet,**

**dass** die Austrittsfläche (10) der Primärlinse (3) stärker als die Austrittsfläche (12) der Sekundärlinse (4) gekrümmt ist.

8. Beleuchtungsvorrichtung nach einem der Ansprüche 2 bis 7,
**dadurch gekennzeichnet,**

**dass** die Primärlinse aplanatisch korrigiert ist.

9. Beleuchtungsvorrichtung nach einem der Ansprüche 1 bis 8,
**dadurch gekennzeichnet,**

**dass** das Linsensystem aus exakt zwei Linsen (3, 4) besteht.

10. Beleuchtungsvorrichtung nach einem der Ansprüche 1 bis 9,
**dadurch gekennzeichnet,**

**dass** die Primärlinse (3) aus einem zentralen Sammellinsenabschnitt (7) und einen den Sammellinsenabschnitt (7) umgebenden Ringlinsenabschnitt (8) ausgebildet ist, der einen Mantelabschnitt (14) aufweist, an dem am Rand in die Primärlinse (3) eintretendes Licht total reflektiert wird.

11. Beleuchtungsvorrichtung nach einem der Ansprüche 1 bis 9,
**dadurch gekennzeichnet,**

**dass** die Primärlinse (3) aus einem zentralen Sammellinsenabschnitt (7) und einen den Sammellinsenabschnitt (7) umgebenden Umlenkringabschnitt (20) ausgebildet ist, der am Rand in die Primärlinse (3) eintretendes quer zur optischen Achse (5) ablenkt.

12. Beleuchtungsvorrichtung nach einem der Ansprüche 1 bis 11,
**dadurch gekennzeichnet,**

**dass** sie ein Array von Lichtquellen (2), ein Array von Primärlinsen (3) und ein Array von Sekundärlinsen (4) aufweist, wobei jeder Lichtquelle (2) eine Primärlinse (3) und eine Sekundärlinse (4) zugeordnet sind.

**13.** Beleuchtungsvorrichtung nach Anspruch 12,
**dadurch gekennzeichnet,**
**dass** zwischen dem Array von Primärlinsen (3) und dem Array von Sekundärlinsen (4) eine Lochblende (18) mit mehreren Öffnungen (19) angeordnet ist, wobei einer jeden Sekundärlinse (4) eine Öffnung (19) der Lochblende (18) zugeordnet ist.

**14.** Beleuchtungsvorrichtung nach Anspruch 12 oder 13,
**dadurch gekennzeichnet,**
**dass** das Array von Lichtquellen (2) Leuchtdioden als Lichtquellen aufweist, die jeweils eine quadratische Abstrahlfläche besitzen, wobei die Leuchtdioden in der Draufsicht zueinander jeweils ein Stück verdreht angeordnet sind.

**15.** Beleuchtungsvorrichtung nach einem der Ansprüche 12 bis 14,
**dadurch gekennzeichnet,**
**dass** die Lichtquellen zum Abstrahlen unterschiedlich farbiger Lichtstrahlkegel ausgebildet sind.

**Claims**

**1.** Lighting device with variable angle of emission with a light source (2) and a lens system comprising two lenses, a primary lens (3) and a secondary lens (4), for focusing the light emitted from the light source (2) into a cone of light rays,
wherein the two lenses (3, 4) and the light source (2) are arranged along an optical axis (5) and the primary lens (3) is located between the light source (2) and the secondary lens (4), and the distance between the primary lens (3) and the secondary lens (4) along the optical axis (5) is variable, in order to vary the angle of emission of the cone of light rays,
**characterised in that**
the primary lens (3) has a numerical aperture of at least 0.7,
the primary lens (3) is an aplanat, and
the secondary lens (4) is designed so as to image to infinity, at a certain distance of the secondary lens (4) from the primary lens (3), a virtual image of the light source (2) generated by the primary lens (3).

**2.** Lighting device with variable angle of emission with a light source (2) and a lens system comprising two lenses, a primary lens (3) and a secondary lens (4), for focusing the light emitted from the light source (2) into a cone of light rays, wherein the two lenses (3, 4) and the light source (2) are arranged along an optical axis (5) and the primary lens (3) is located between the light source (2) and the secondary lens (4), and the distance between the primary lens (3) and the secondary lens (4) along the optical axis (5) is variable, in order to vary the angle of emission of the cone of light rays,
**characterised in that**
the primary lens (3) has a numerical aperture of at least 0.7,
that the secondary lens (4) may be moved by a distance extending in a range in which the secondary lens (4) does not capture the whole of the cone of light rays generated by the primary lens (3).

**3.** Lighting device according to claim 1 or 2,
**characterised in that**
the primary lens (3) is mounted at a predetermined distance from the light source (2), and that the secondary lens (4) may be moved by a distance amounting to the multiple of the distance between primary lens (3) and secondary lens (4).

**4.** Lighting device according to any of claims 1 to 3,
**characterised in that**
the primary lens (3) has a numerical aperture of at least 0.9.

**5.** Lighting device according to any of claims 1 to 4,
**characterised in that**
**that** the secondary lens (4) may be moved by a distance extending in a range in which the secondary lens (4) does not capture the whole of the cone of light rays generated by the primary lens (3).

**6.** Lighting device according to any of claims 1 to 5,
**characterised in that**
the primary lens (3) and the secondary lens (4) each have in their centres a concave entrance surface (9, 11) and a convex exit surface (10, 12).

**7.** Lighting device according to claim 6,
**characterised in that**
the exit surface (10) of the primary lens (3) is more sharply curved than the exit surface (12) of the secondary lens (4).

**8.** Lighting device according to any of claims 2 to 7,
**characterised in that**
the primary lens is corrected aplanatically.

**9.** Lighting device according to any of claims 1 to 8
**characterised in that**
the lens system comprises exactly two lenses (3, 4).

**10.** Lighting device according to any of claims 1 to 9
**characterised in that**
the primary lens (3) is formed of a central focusing lens section (7) and an annular lens section (8) surrounding the focusing lens section (7) and having a sheath section (14) at which light entering the primary lens (3) is totally reflected at the boundary.

**11.** Lighting device according to any of claims 1 to 9, **characterised in that**
the primary lens (3) is formed of a central focusing lens section (7) and a deflecting ring section (20) surrounding the focusing lens section (7) and deflecting at right-angles to the optical axis (5) light entering the primary lens (3) at the boundary.

**12.** Lighting device according to any of claims 1 to 11, **characterised in that**
it has an array of light sources (2), an array of primary lenses (3) and an array of secondary lenses (4), in which each light source (2) is assigned a primary lens (3) and a secondary lens (4).

**13.** Lighting device according to claim 12, **characterised in that**
a pinhole diaphragm (18) with several apertures (19) is provided between the array of primary lenses (3) and the array of secondary lenses (4), while each secondary lens (4) is assigned an aperture (19) of the pinhole diaphragm (18).

**14.** Lighting device according to claim 12 or 13, **characterised in that**
the array of light sources (2) has as light sources light-emitting diodes, each having a rectangular emitting surface, with the light-emitting diodes each rotated a little from one another when viewed from above.

**15.** Lighting device according to any of claims 12 to 14, **characterised in that**
the light sources are designed to emit cones of light rays of different colour.

**Revendications**

**1.** Dispositif d'éclairage présentant un angle de rayonnement variable, comprenant
une source de lumière (2) et
un système de lentilles, qui comprend deux lentilles, une lentille primaire (3) et une lentille secondaire (4), pour focaliser la lumière qui rayonne depuis la source de lumière (2) en un cône de rayonnement de lumière,
dans lequel les deux lentilles (3, 4) et la source de lumière (2) sont agencées le long d'un axe optique (5) et la lentille primaire (3) se trouve entre la source de lumière (2) et la lentille secondaire (4), et la distance entre la lentille primaire (3) et la lentille secondaire (4) le long de l'axe optique (5) est variable afin de faire varier l'angle de rayonnement du cône de rayonnement de lumière,
**caractérisé en ce que**
la lentille primaire (3) présente une ouverture numérique d'au moins 0,7,
la lentille primaire (3) est un aplanat, et
la lentille secondaire (4) est réalisée de telle manière qu'elle forme à l'infini l'image d'une image virtuelle de la source de lumière (2) engendrée par la lentille primaire (3) pour une distance déterminée de la lentille secondaire (4) depuis la lentille primaire (3).

**2.** Dispositif d'éclairage présentant un angle de rayonnement variable, comprenant
une source de lumière (2) et
un système de lentilles, qui comprend deux lentilles, une lentille primaire (3) et une lentille secondaire (4), pour focaliser la lumière qui rayonne depuis la source de lumière (2) en un cône de rayonnement de lumière, dans lequel les deux lentilles (3, 4) et la source de lumière (2) sont agencées le long d'un axe optique (5) et la lentille primaire (3) se trouve entre la source de lumière (2) et la lentille secondaire (4), et la distance entre la lentille primaire (3) et la lentille secondaire (4) le long de l'axe optique (5) est variable afin de faire varier l'angle de rayonnement du cône de rayonnement de lumière,
**caractérisé en ce que**
la lentille primaire (3) présente une ouverture numérique d'au moins 0,7,
et la lentille secondaire (4) est déplaçable d'un trajet qui s'étend dans une région dans laquelle la lentille secondaire (4) ne recouvre pas la totalité du cône de rayonnement de lumière engendré par la lentille primaire (3).

**3.** Dispositif d'éclairage selon la revendication 1 ou 2, **caractérisé en ce que**
la lentille primaire (3) est agencée à une distance prédéterminée de la source de lumière (2),
et la lentille secondaire (4) est déplaçable d'un trajet qui s'élève à un multiple de la distance entre la lentille primaire (3) et la lentille secondaire (4).

**4.** Dispositif d'éclairage selon l'une des revendications 1 à 3,
**caractérisé en ce que**
la lentille primaire (3) présente une ouverture numérique d'au moins 0,9.

**5.** Dispositif d'éclairage selon l'une des revendications 1 à 4,
**caractérisé en ce que**
la lentille secondaire (4) est déplaçable d'un trajet qui s'étend dans une région dans laquelle la lentille secondaire (4) ne recouvre pas la totalité du cône de rayonnement de lumière engendré par la lentille primaire.

**6.** Dispositif d'éclairage selon l'une des revendications 1 à 5,
**caractérisé en ce que**
la lentille primaire (3) et la lentille secondaire (4) présentent à leur centre chacune une surface d'entrée concave (9, on 11) et chacune une surface de sortie convexe (10, 12).

**7.** Dispositif d'éclairage selon la revendication 6,
**caractérisé en ce que**
la surface de sortie (10) de la lentille primaire (3) présente une courbure plus forte que la surface de sortie (12) de la lentille secondaire (4).

**8.** Dispositif d'éclairage selon l'une des revendications 2 à 7,
**caractérisé en ce que**
la lentille primaire est corrigée à la manière d'un aplanat.

**9.** Dispositif d'éclairage selon l'une des revendications 1 à 8,
**caractérisé en ce que**
le système de lentilles est constitué d'exactement deux lentilles (3, 4).

**10.** Dispositif d'éclairage selon l'une des revendications 1 à 9,
**caractérisé en ce que**
la lentille primaire (3) est formée d'un tronçon de lentille convergente (7) au centre et d'un tronçon de lentille annulaire (8) qui entoure le tronçon de lentille convergente (7), ce dernier présentant un tronçon enveloppe au niveau duquel la lumière qui entre au bord dans la lentille primaire (3) est totalement réfléchie.

**11.** Dispositif d'éclairage selon l'une des revendications 1 à 9,
**caractérisé en ce que**
la lentille primaire (3) est formée d'un tronçon de lentille convergente (7) au centre et d'un tronçon annulaire de renvoi (20) qui entoure le tronçon de lentille convergente (7), qui renvoie la lumière qui entre au bord dans la lentille primaire (3) transversalement vers l'axe optique (5).

**12.** Dispositif d'éclairage selon l'une des revendications 1 à 11,
**caractérisé en ce que**
il comprend un réseau de sources de lumière (2), un réseau de lentilles primaires (3) et un réseau de lentilles secondaires (4), dans lequel une lentille primaire (3) et une lentille secondaire (4) sont associées à chaque source de lumière (2).

**13.** Dispositif d'éclairage selon la revendication 12,
**caractérisé en ce que**
un diaphragme à trous (18) présentant plusieurs ouvertures (19) est agencé entre le réseau de lentilles primaires (3) et le réseau de lentilles secondaires (4), dans lequel une ouverture (19) du diaphragme à trous (18) est associée à chaque lentille secondaire (4).

**14.** Dispositif d'éclairage selon la revendication 12 ou 13,
**caractérisé en ce que**
le réseau de sources de lumière (2) comprend des diodes électroluminescentes à titre de sources de lumière, lesquelles possèdent chacune une surface de rayonnement carrée, et les diodes électroluminescentes sont agencées en étant légèrement tournées les unes par rapport aux autres en vue de dessus.

**15.** Dispositif d'éclairage selon l'une des revendications 12 à 14,
**caractérisé en ce que**
les sources de lumière sont réalisées pour rayonner des cônes de rayonnement de lumière de couleurs différentes.

FIG. 1a

FIG. 1b

FIG. 2a

FIG. 2b

FIG. 1c

FIG. 2c

FIG. 3

FIG. 4

Candela

degrees

FWHM-Winkel: 24°

FIG. 5a

Candela

degrees

14°

FIG. 5b

Candela

degrees

8°

FIG. 5c

Candela

degrees

FWHM-Winkel: 24°

FIG. 6a

Candela

degrees

10°

FIG. 6b

Candela

degrees

8°

FIG. 6c

| Eintrittsfläche | |
| --- | --- |
| y | z |
| 0 | 1,68002377 |
| 0,02111138 | 1,67990184 |
| 0,04222023 | 1,67953609 |
| 0,06332404 | 1,67892662 |
| 0,08442029 | 1,67807352 |
| 0,10550644 | 1,67697688 |
| 0,12658 | 1,67563693 |
| 0,14763847 | 1,67405393 |
| 0,16867934 | 1,67222814 |
| 0,18970013 | 1,67015984 |
| 0,21069837 | 1,6678494 |
| 0,23167161 | 1,66529725 |
| 0,25261738 | 1,66250381 |
| 0,27353326 | 1,65946955 |
| 0,29441683 | 1,65619503 |
| 0,31526572 | 1,65268081 |
| 0,33607754 | 1,6489275 |
| 0,35684993 | 1,64493572 |
| 0,37758058 | 1,64070622 |
| 0,3982672 | 1,63623973 |
| 0,4189075 | 1,631537 |
| 0,43949923 | 1,62659886 |
| 0,46004022 | 1,62142623 |
| 0,48052827 | 1,61601998 |
| 0,50096124 | 1,61038104 |
| 0,52133703 | 1,60451044 |
| 0,54165362 | 1,59840925 |
| 0,56190897 | 1,59207851 |
| 0,58210109 | 1,58551934 |
| 0,60222812 | 1,57873295 |
| 0,62228819 | 1,57172056 |
| 0,64227945 | 1,5644834 |
| 0,66220018 | 1,55702277 |
| 0,68204872 | 1,54934007 |
| 0,70182346 | 1,54143668 |
| 0,7215228 | 1,53331401 |
| 0,74114531 | 1,52497357 |
| 0,76068962 | 1,51641691 |
| 0,78015438 | 1,50764559 |
| 0,79953843 | 1,49866125 |
| 0,81884063 | 1,48946558 |
| 0,83805995 | 1,48006028 |
| 0,85719554 | 1,47044715 |
| 0,87624656 | 1,46062801 |
| 0,89521237 | 1,45060472 |
| 0,91409246 | 1,44037924 |
| 0,93288639 | 1,42995352 |
| 0,95159395 | 1,41932961 |
| 0,97021509 | 1,40850959 |
| 0,98874983 | 1,3974956 |
| 1,00719852 | 1,38628985 |

| Eintrittsfläche | |
| --- | --- |
| y | z |
| 1,02556162 | 1,3748946 |
| 1,04383974 | 1,36331214 |
| 1,06203392 | 1,35154488 |
| 1,08014525 | 1,33959524 |
| 1,09817514 | 1,32746572 |
| 1,11612533 | 1,31515889 |
| 1,1339978 | 1,30267739 |
| 1,15179495 | 1,29002393 |
| 1,16951942 | 1,27720128 |
| 1,18717437 | 1,2642123 |
| 1,20476323 | 1,25105991 |
| 1,22229006 | 1,23774713 |
| 1,23975922 | 1,22427704 |
| 1,25717583 | 1,21065285 |
| 1,27454537 | 1,1968778 |
| 1,29187419 | 1,18295527 |
| 1,30916912 | 1,16888872 |
| 1,32643796 | 1,15468172 |
| 1,34368921 | 1,14033794 |
| 1,36093238 | 1,12586118 |
| 1,37817791 | 1,11125533 |
| 1,39543748 | 1,09652443 |
| 1,41272395 | 1,08167264 |
| 1,43005149 | 1,06670427 |
| 1,44743594 | 1,05162377 |
| 1,46489468 | 1,03643575 |
| 1,482447 | 1,02114497 |
| 1,50011441 | 1,0057564 |
| 1,51792056 | 0,99027517 |
| 1,53589189 | 0,97470664 |
| 1,55405772 | 0,95905639 |
| 1,57245075 | 0,94333025 |
| 1,59110743 | 0,92753432 |
| 1,61006855 | 0,91167503 |
| 1,62937982 | 0,89575914 |
| 1,64909263 | 0,87979384 |
| 1,66926494 | 0,86378682 |
| 1,68996242 | 0,84774633 |
| 1,71125964 | 0,83168135 |
| 1,73324191 | 0,81560174 |
| 1,75600736 | 0,79951851 |
| 1,77966952 | 0,78344411 |
| 1,80436105 | 0,76739292 |
| 1,83023825 | 0,75138186 |
| 1,85748756 | 0,73543136 |
| 1,88633434 | 0,71956667 |
| 1,91705544 | 0,70381992 |
| 1,9499978 | 0,68823318 |
| 1,98560683 | 0,67286344 |
| 2,02447174 | 0,65779074 |

## FIG. 7a

| Austrittsfläche | |
|---:|---:|
| **y** | **z** |
| 0 | 4,61701858 |
| 0,05697639 | 4,61645257 |
| 0,11392749 | 4,61475549 |
| 0,17082804 | 4,61192873 |
| 0,22765279 | 4,60797372 |
| 0,2843765 | 4,60289219 |
| 0,34097409 | 4,59668774 |
| 0,39742065 | 4,58936458 |
| 0,45369124 | 4,58092693 |
| 0,50976097 | 4,57137928 |
| 0,56560529 | 4,56072782 |
| 0,62119988 | 4,5489794 |
| 0,67652041 | 4,53614088 |
| 0,73154267 | 4,52221961 |
| 0,78624303 | 4,50722458 |
| 0,84059797 | 4,49116508 |
| 0,89458402 | 4,4740504 |
| 0,94817805 | 4,45589083 |
| 1,00135758 | 4,43669791 |
| 1,05410019 | 4,41648331 |
| 1,10638352 | 4,39525879 |
| 1,15818593 | 4,37303745 |
| 1,2094863 | 4,34983322 |
| 1,26026354 | 4,32566001 |
| 1,31049676 | 4,30053209 |
| 1,36016612 | 4,2744652 |
| 1,40925207 | 4,24747541 |
| 1,45773507 | 4,21957883 |
| 1,50559617 | 4,19079228 |
| 1,55281748 | 4,16113376 |
| 1,59938125 | 4,13062143 |
| 1,6452698 | 4,09927349 |
| 1,69046647 | 4,06710919 |
| 1,7349555 | 4,03414859 |
| 1,77872116 | 4,00041174 |
| 1,82174805 | 3,965919 |
| 1,86402208 | 3,93069182 |
| 1,90552949 | 3,89475184 |
| 1,94625687 | 3,85812101 |
| 1,98619201 | 3,82082212 |
| 2,02532295 | 3,78287809 |
| 2,0636384 | 3,7443123 |
| 2,1011282 | 3,70514884 |
| 2,13778235 | 3,66541187 |
| 2,17359187 | 3,62512614 |
| 2,20854872 | 3,58431691 |
| 2,24264506 | 3,54300956 |
| 2,27587434 | 3,5012301 |
| 2,30823077 | 3,45900491 |
| 2,33970884 | 3,41636053 |
| 2,37030462 | 3,37332417 |

| Austrittsfläche | |
|---:|---:|
| **y** | **z** |
| 2,40001461 | 3,32992327 |
| 2,42883594 | 3,28618551 |
| 2,45676732 | 3,24213924 |
| 2,48380777 | 3,19781293 |
| 2,50995734 | 3,15323545 |
| 2,53521724 | 3,10843614 |
| 2,55958939 | 3,06344458 |
| 2,58307697 | 3,01829085 |
| 2,60568383 | 2,97300527 |
| 2,62741526 | 2,9276187 |
| 2,64827715 | 2,88216221 |
| 2,66827697 | 2,83666745 |
| 2,68742281 | 2,79116634 |
| 2,70572437 | 2,74569136 |
| 2,7231921 | 2,70027529 |
| 2,73983803 | 2,65495152 |
| 2,75567511 | 2,60975378 |
| 2,77071781 | 2,56471644 |
| 2,78498176 | 2,51987428 |
| 2,79848396 | 2,47526268 |
| 2,81124277 | 2,43091758 |
| 2,82327804 | 2,38687553 |
| 2,83461102 | 2,34317368 |
| 2,84526439 | 2,29984981 |
| 2,85526246 | 2,25694241 |
| 2,86463097 | 2,2144906 |
| 2,87339726 | 2,17253421 |
| 2,88159033 | 2,1311138 |
| 2,88924065 | 2,09027055 |
| 2,89638037 | 2,05004639 |
| 2,9030432 | 2,01048388 |
| 2,90926441 | 1,97162622 |
| 2,91508079 | 1,93351714 |
| 2,92053058 | 1,89620089 |
| 2,92565338 | 1,85972209 |
| 2,93049007 | 1,82412564 |
| 2,93508266 | 1,78945656 |
| 2,93947412 | 1,75575982 |
| 2,94370819 | 1,72308016 |
| 2,9478292 | 1,69146188 |
| 2,95188178 | 1,6609486 |
| 2,95591068 | 1,63158308 |
| 2,95996047 | 1,60340696 |
| 2,96407536 | 1,5764606 |
| 2,96829892 | 1,55078299 |
| 2,97267407 | 1,52641172 |
| 2,97724296 | 1,50338308 |
| 2,98204724 | 1,48173251 |
| 2,98712849 | 1,46149528 |
| 2,99252918 | 1,44270784 |

## FIG. 7b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19901391 A1
- EP 0846913 B1
- WO 2006020574 A1
- DE 102006059434 A1
- US 20050174768 A1
- EP 1890076 A1
- WO 2007017617 A1
- DE 1165514

**In der Beschreibung aufgeführte Nicht-Patentliteratur**

- **Harald Ries et al.** Edge-Ray principle of non-imaging optics. *Optical Society of America,* 10. Oktober 1994, 2627 ff